Europäisches Patentamt

European Patent Office

Office européen des brevets

(11) Publication number: 0 574 589 A1

## EUROPEAN PATENT APPLICATION
## published in accordance with Art. 158(3) EPC

(21) Application number: 93900408.1

(22) Date of filing: 28.12.92

(86) International application number:
PCT/JP92/01728

(87) International publication number:
WO 93/12651 (08.07.93 93/16)

(51) Int. Cl.5: A01K 63/04

(30) Priority: 27.12.91 JP 358056/91

(43) Date of publication of application:
22.12.93 Bulletin 93/51

(84) Designated Contracting States:
DE FR GB

(71) Applicant: ONNASON GYOGYOU
KYOUDOUKUMIAI
59, Aza Maekaneku,
Onnason
Kunigami-gun, Okinawa 904-04(JP)
Applicant: KABUSHIKI KAISHA AOIUMI
5-4, Nishizakicho 4-chome
Itoman-shi, Okinawa 901-03(JP)
Applicant: TOMA, Takeshi
43-15, Aza Ueta,
Tomigusuku-son
Shimariri-gun, Okinawa 901-02(JP)
Applicant: MEGARI, Munekazu
2136, Aza Seragaki,
Onna-son
Kunigami-gun, Okinawa 904-04(JP)
Applicant: TOYOHIRA, Choushou
290, Nakaima

Naha-shi, Okinawa 902(JP)

(72) Inventor: TOMA, Takeshi 43-15, Aza Ueta
Tomigusuku-son
Shimaziri-gun Okinawa 901-02(JP)
Inventor: MEGARI, Munekazu 2136, Aza
Seragaki
Onna-son
Kunigami-gun Okinawa 904-04(JP)
Inventor: TOYOHIRA, Choushou 290, Nakaima
Naha-shi
Okinawa 902(JP)
Inventor: HIGA, Yoshimi 143, Aza Fuchaku
Onna-son
Kunigami-gun Okinawa 904-04(JP)
Inventor: CHINEN, Ryuuichi
5-4, Nishizakicho 4-chome
Itoman-shi Okinawa 901-03(JP)

(74) Representative: von Kirschbaum, Albrecht,
Dipl.-Ing.
Patentanwalt,
Hermann Ehlers-Strasse 21A
D-82110 Germering (DE)

(54) METHOD OF AND APPARATUS FOR CULTIVATING MARINE ORGANISMS.

(57) A method of and an apparatus for cultivating marine organisms while circulating the water in the upper and bottom portions of the interior of a marine organism cultivating tank by conducting aeration in the tank so as to generate a vertical convection flow of water therein. A tank (1) is formed by detachably putting a water impermeable sheet cover (3) on a frame body, and provided with a water introducing and discharging port (4) in the central portion of a bottom wall thereof. When the air is introduced into the tank (1) via an air supply pipe (7), a vertical convection flow occurs owing to the lifting force of bubbles. Consequently, the water outside the tank is introduced via the water introducing and discharging port (4) into the tank and the water inside the tank is

discharged therethrough to the outside thereof. The marine organisms are cultivated as the water in the tank and that outside the same are thus circulated. Accordingly, the sunlight can be applied uniformly to the algae constantly moving in the tank while they are cultivated therein, and the salt at the bottom of the sea, nutritive chlorine and brine of a stable temperature can be introduced into the tank. The contaminated brine in the tank is discharged therefrom at the same time, so that the cultivation environment in the tank can be improved and controlled.

FIG. 14

## TECHNICAL FIELD

This invention relates to a method for the cultivation of marine organisms and apparatus therefor for effectively practicing the cultivation of algaes, shell fish, Pisces and the like, production and preservation of seedings of marine organisms, and culture of feed.

## BACKGROUND

Various cultivating methods have been heretofore practiced for the cultivation of marine organisms. From a viewpoint of cultivation facilities, there have been known a net cultivation and a rope cultivation for algaes; a trailing cultivation and an andon cage cultivation for shell fish; an embankment cultivation, a net crawl cultivation and a rise and fall crawl cultivation for Pisces; and a tank culture carried out in a tank installed on the land for seedings for fishes and shellfishes and algaes.

In the above-described conventional cultivation methods, for example, in the case of cultivation at sea, a flow of sea water which forms a cultivating environment relies on a natural tide, and no circulation of sea water in the surface of the sea and in the bottom of the sea is carried out. For this reason, the flow of sea water which forms a cultivating environment is governed by weather and is directly affected by contamination of the surface of the sea such as a red tide, outflow oil and the like. In the cultivation of Pisces, the interior of the crawl net and a fishing ground therearound are contaminated by remaining baits, and the cultivation environment tends to become worsened. There is a further problem in that a net wear occurs, thus failing to achieve raising with high density. Further, in the case of cultivation of algaes, there is a variety of troublesome related to gathering of seedings from algaes, preservation of seedings, and intermediate and final raisings. There poses a further problem in that algaes under cultivation outflow due to waves. Moreover, in the cultivation of shell fish, there are problems such as the outflow of the cultivating facilities such as cages, the low density of production of seedings, etc.. Further, the cultivation of feed organisms is difficult to perform on the sea affected by waves as described above. Generally, the cultivation of feed orgnisms is carried out on the land. However, the cultivation of feed organisms on the land is inevitably small in scale as compared with that on the sea. There is further involved a problem in that the management of feeds is troublesome.

On the other hand, in the cultivation on the sea, there has been proposed a cultivation method in which a number of air tubes formed with air holes are arranged directly under the area where organisms being cultivated are present to blow out air so that sea water is fluidized (Japanese Patent Laid-Open Publication No. 200132/1990). In this method, air is blown out of the tubes directly under the area where organisms are located to thereby mix sea water, dilute stains resulting from excretion and replenish oxygen into sea. Since cultivation areas are merely partitioned by nets, a vertical convection of sea water is hard to occur; and it is not possible to introduce sea water into the cultivation areas from the bottom of the sea and discharge sea water in the cultivation areas outside the cultivation areas. The above-described problems are still unsolved.

Further, a method has not heretofore been known in which sea water within a specific closed block defined in the sea is vertically circulated, and cultivation takes place within the closed block in the sea while introducing sea water outside the block from a specific inlet. Accordingly, it has been difficult to cultivate fishes and shellfishes living at deep positions in a similar environment.

## DISCLOSURE OF THE INVENTION

An object of the present invention to provide a method and apparatus for the cultivation of marine organisms for effectively practicing cultivation of fishes and shellfishes, algaes, etc. or preservation of seedings and culture of feeds (hereinafter merely referred to as the cultivation of marine organisms) within a tank that can be applied under any conditions on the water and under water of sea, lake and the like, or on the land, while solving the problems encountered in the above-described conventional method and apparatus for the cultivation of marine organisms.

It is a more specific object of the present invention to provide a method for the cultivation of marine organisms and apparatus therefore, which allows a vertical convection to efficiently generate in water within a tank in which marine organisms are cultivated whereby the raising environment can be improved, fishes and shellfishes and algaes can be cultivated with high density, and preservation of seedings and culture of feeds can be made.

It is a further object of the present invention to provide a method for the cultivation of marine organisms and apparatus therefor that can improve the environment of cultivation within a tank by the cultivation while circulating water within the tank installed on or under water on the sea or in the sea with water not

3

contaminated at a deep position.

It is another object of the present invention to provide a method for the cultivation of marine organisms and apparatus therefor that can improve the environment of cultivation within a tank by refluxing water within the tank installed interiorly of a water vessel into the tank while purifying the same.

It is still another object of the present invention to provide a method for the cultivation of marine organisms and apparatus therefor which can create a specific environment of cultivation defined by films in water and free to effect circulation of water with the outside a block and in which marine organisms can be cultivated in an area of their living depth.

One of the aforementioned objects can be achieved by a method for the cultivation of marine organisms, which comprises upwardly feeding air into water within a tank from the neighbourhood of the bottom of the tank in which marine organisms are cultivated to thereby generate a vertical convection in water within the tank, and cultivating marine organisms therein.

There is employed an arrangement characterized in that the aforesaid tank has its upper end located above a water level with its bottom at the lower end located in water, an intake drain hole is opened in the central portion of the lower end bottom, air adapted to generate a vertical convection within the tank is fed into the tank from the central portion of the intake drain hole to generate the vertical convection of water within the tank whereby water is introduced into the tank from the intake drain hole and the water within the tank is allowed to flow outside the tank, and the marine organisms are cultivated while exchanging the water within the tank with the water outside the tank, thus enabling suitable cultivation on the sea or the lake. Alternatively, if an arrangement is made so that the tank is installed on the land, water is supplied into the tank from an external source and water within the tank may be discharged outside due to overflow, suitable cultivation on the land can be carried out.

Alternatively, if an arrangement is made so that the tank is installed within a water vessel installed on the land, a drain hole is provided at the bottom thereof, a water supply pipe connected to a storage tank installed within the water vessel is provided in the central portion of the drain hole, an air tube is provided extending through the water supply pipe, air adapted to generate a vertical convection is fed from the air tube to generate the vertical convection in water within the tank whereby purified water filtrated within the storage tank is introduced through the water supply pipe into the tank and the water within the tank is discharged into the water vessel, and the water discharged into the water vessel is filtrated and again returned to the storage tank for circulation, thus enabling the effective cultivation of marine organisms with limited quantities of water on the land.

There is a further arrangement wherein the tank is installed in water, an intake drain hole is opened in the central portion of the lower end bottom thereof, air adapted to generate a vertical convection in the tank is supplied from the central portion of the intake drain hole to generate the vertical convection of water within the tank whereby water is introduced into the tank from the intake drain hole and the water within the tank is allowed to flow outside the tank. With this arrangement, the cultivation can be effectively carried out in sea.

The cultivation apparatus for achieving the above-described cultivation method comprises a tank for cultivating marine organisms, and an air pipe having an air jet adapted to upwardly jet air into water within the tank in the vicinity of the tank and having a base end connected to an air device. In the case of the cultivation on the sea, preferably, the tank has its upper end located above a water level with its lower end bottom located in water, an intake drain hole is opened in the central portion of the lower end bottom, and the air pipe is arranged so as to feed air into the tank from the central portion of the intake drain hole. If the tank is designed so that a water impermeable sheet cover is detachably placed over a frame, it can be installed and removed at less cost and readily.

In the case of the cultivation on the land, the tank is installed on the land, a water pipe through which water is supplied into the tank from the outside is connected, and a drain pipe through which water within the tank is discharged outside from the top is connected, whereby water within the tank can be circulated vertically within the tank and exchanged with outside water. Further, the tank is installed within a water vessel so that water within the water vessel can flow therein, a filtration vessel provided with a filter adapted to filtrate water within the water vessel and a storage tank into which water filtrated by the filtration vessel flows are provided, a water pipe for supplying water within the storage tank through the central portion of the drain hole into the tank is connected to the storage tank, and an air pipe for feeding air from an air device to the lower central portion of the tank passing through the water pipe, whereby water can be purified and circulated into the tank.

There is further provided an apparatus for the cultivation of marine organisms, comprising a tank for cultivating marine organisms having an intake drain hole opened in the central portion of the lower end bottom, an exhaust valve and a bait feeding or a fertilizer dropping hole provided at the upper part and a

4

harvest hole provided in a suitable peripheral wall, an air pipe for feeding air through said intake drain hole to the central portion at the lower part of said tank, a bait feeding or a fertilizer dropping pipe connected to said bait feeding or the fertilizer dropping hole and provided so that baits or fertilizers may be supplied into said tank, and a harvest pipe having one end connected to said harvest hole while the other end being connected to a pump. With this apparatus, cultivation can be effectively carried out in water. Sunlight is fed from the water surface into the tank in water by an optical fiber to illuminate the interior thereof whereby even if the tank is formed of a light impermeable material, cultivation can be effectively carried out.

According to the method for the cultivation of marine organisms and apparatus therefor of the present invention constructed as described above, the interior of the tank is isolated from the exterior by a tank wall and is communicated with water outside the tank through the intake drain hole alone. Therefore, air is jetted through the air pipe to the central portion of the intake drain hole from the air device to effect aeration whereby as bubbles move upward, water under the intake drain hole is introduced into the tank so that an up-flow of water occurs in the central portion of the tank while water within the tank is formed into a down-flow along the inner peripheral surface of the tank, reaches through a funnel portion to the intake drain hole and is discharged outside.

That is, according to the present invention, the vertical convection of water can be suitably produced in the tank by the simple apparatus, sunlight can be evenly exposed to the water within the tank, the light synthesization of cultivation plants is evenly promoted to make active the movement of marine products and algaes within the tank, and in this way the cultivation with high quality can be attained. Further, since the wall surface of the tank is of the film construction, no wear of net caused by Pisces and the like occurs.

In the case of cultivation in sea, the introduction of salt and nutritious chlorine present in the sea bottom and temperature-stabilized sea water into the tank and the discharge of stained sea water within the tank can be simultaneously conducted to greatly improve the raising environment within the tank. Thereby, in the cultivation of Pisces, the contamination within the tank caused by the remaining baits does not occur, the cultivation of Pisces with high density can be executed, and volume production can be promoted. In the culture of feeds, nutritious sea water in the sea bottom can be easily introduced and generation of bait organisms can be promoted to promote labor saving of management. Since the circulation of sea water and the control of nutritious salts within the tank can be made, the cultivation of algaes making use of nutritious generation of algaes, which has been heretofore difficult in the sea, can be carried out.

Moreover, even if the sea surface is exposed to a large amount of rains and to the contamination from an oil tanker or the like, an entry thereof into the tank can be prevented since the position for taking water is below the sea level. Furthermore, it is possible to effectively raise and culture marine animals and plants completely under water, which has been heretofore difficult to attain.

## BRIEF DESCRIPTION OF THE DRAWINGS

The drawings show embodiments of apparatus for the cultivation of marine organisms according to the present invention.

Fig. 1 is a front schematic view show in the state where a sheet cover of the apparatus for the cultivation of marine organisms on the sea according to one embodiment of the present invention is partly removed;

Fig. 2 is an explanatory view for the function thereof;

Fig. 3 is a bottom view of a tank;

Fig. 4 is an enlarged view showing essential parts of Fig. 1;

Fig. 5 is a front schematic view of the apparatus for the cultivation of marine organisms on the sea according to a further embodiment of the present invention;

Fig. 6 is a sectional view taken on line A-A of Fig. 5;

Fig. 7 is a front schematic view of the apparatus for the cultivation of marine organisms on the land according to another embodiment of the present invention;

Fig. 8 is a sectional view taken on line B-B of Fig. 7;

Fig. 9 is a cutaway perspective view showing essential parts of Fig. 7;

Fig. 10 is a plan schematic view of the apparatus for the cultivation of marine organisms on the land according to still another embodiment of the present invention;

Fig. 11 is a schematic view in section taken on line C-C of Fig. 10;

Fig. 12 is a schematic view in section taken on line D-D of Fig. 10;

Fig. 13 is a schematic view in section taken on line E-E thereof; and

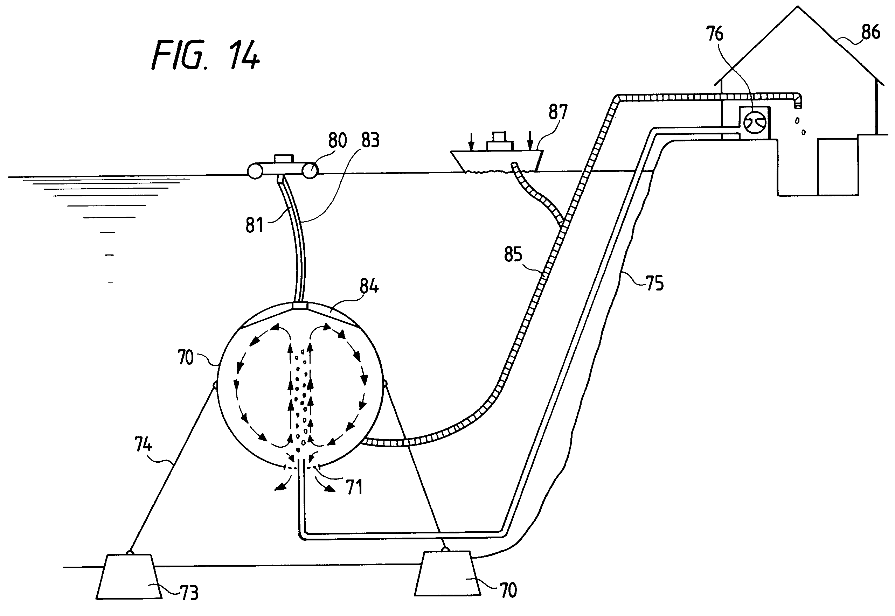

Fig. 14 is a conceptual view of the apparatus for the cultivation of marine organisms in water according to still another embodiment of the present invention.

## BEST MODE FOR EMBODYING THE INVENTION

Preferred embodiments of the present invention will now be described in detail with reference to the drawings.

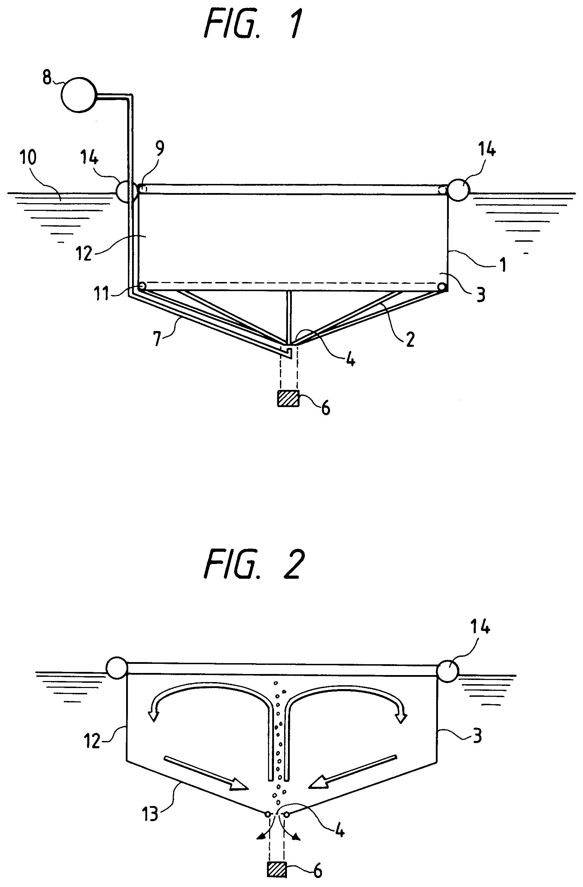

Figs. 1 to 4 show one embodiment of the cultivation apparatus on the sea according to the present invention. In these drawings, reference numeral 1 designates a tank, which comprises an upper frame 9 in the shape of a ring formed from a rod or pipe formed of wood, metal or plastic, and a lower frame 2 having a ring 11 of the same diameter as that of the upper frame and assembled in the shape of a funnel, and the outer surfaces of these frames are covered with a sheet cover 3. The sheet cover 3 is formed from a bendable sheet having a salt water resistance, a water impermeability and a high rupture strength, for example, such as a membrane obtained by coating a chloroprene rubber or the like on a base cloth of synthetic fiber, the sheet cover 3 comprising a cylindrical portion 12 having substantially the same inner diameter as the outer diameter of the ring of the upper frame 9, and a funnel portion 13 formed along the outer surface of the lower frame 2. The upper end of the sheet cover 3 is secured to the upper frame 2 and the funnel portion 13 is secured to the outer peripheral surface of the lower frame 2 whereby the lower frame is submerged beneath the sea due to its own weight and a weight so that the cylindrical portion is pulled to form the tank 1 in the shape of a cylindrical funnel as shown in Fig. 1. Accordingly, the cylindrical portion will merely suffice to have the frame merely comprised of the upper ring and unnecessary to have a frame in the intermediate portion.

A suitable number of floats 14 are secured to the upper frame 9, and the tank 1 is floated so that the upper end of the tank somewhat protrudes from the sea level to prevent sea water from entering the tank from the top. A weight 6 is hung down on the lower frame to prevent the funnel portion from rising due to buoyancy, thus maintaining the shape of the tank.

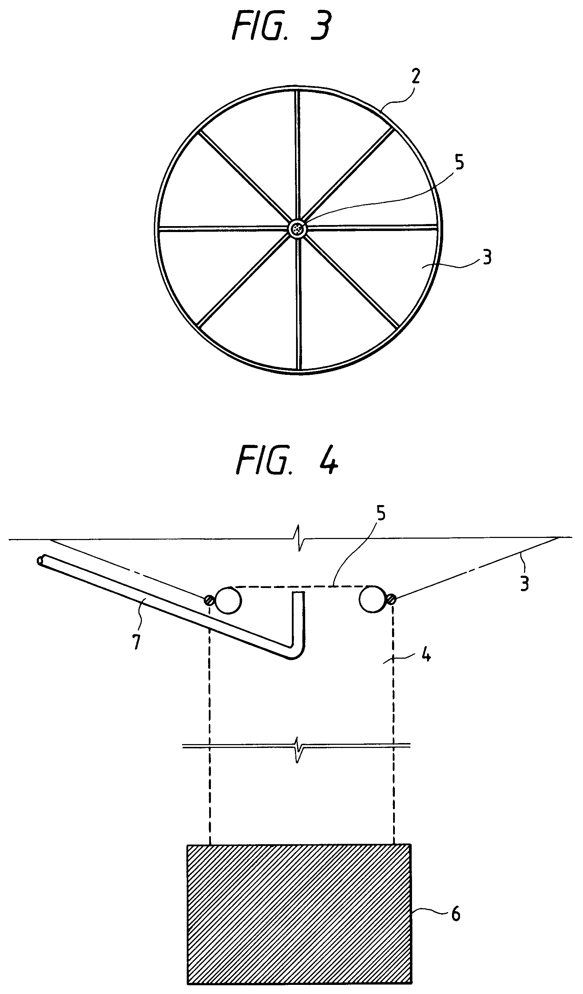

Reference numeral 4 designates an intake drain hole opened to the bottom of the funnel portion, and a net 5 (Figs. 3 and 4) is placed thereon whose meshes are about 3 to 10 mm to prevent an entry of injurious organisms and an outflow of organisms within the tank. Reference numeral 7 designates an air pipe adapted to provide aeration for the intake drain hole, the base end of which is connected is connected to an air device 8 suitably mounted on the sea surface 10, and an open end thereof is arranged to be opposed vertically from the bottom to the central portion of the intake drain hole 4 so as to jet air vertically to the intake drain hole 4.

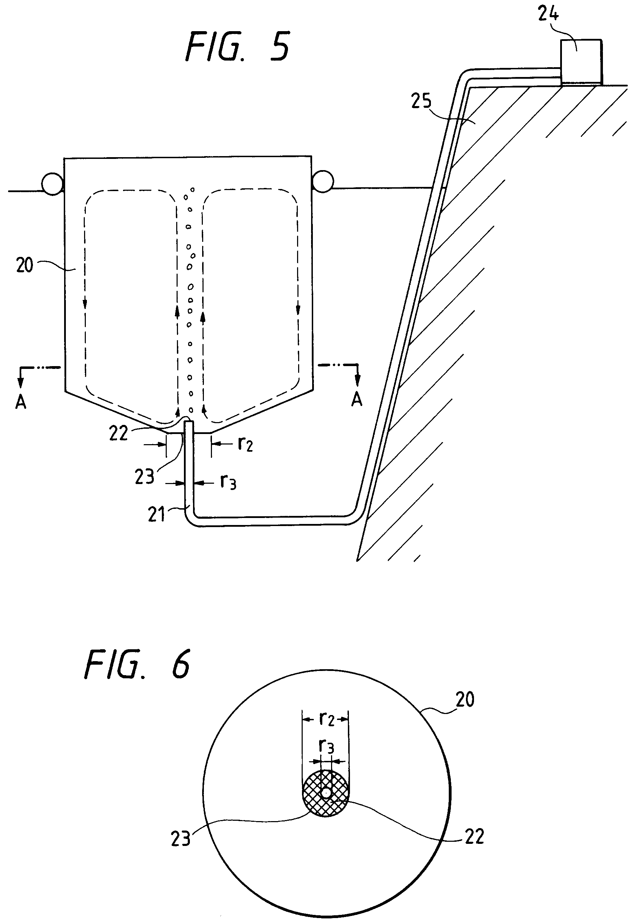

The cultivation apparatus according to the present embodiment is constructed as described above. Air is jetted through the air pipe 7 to the central portion of the intake drain hole 4 by the air device 8 to effect aeration. Sea water under the intake drain hole 4 is introduced into the tank with an up-flow of bubbles as shown in Fig. 2 to generate an up-flow of sea water in the central portion of the tank. Sea water in the tank forms a down-flow along the inner peripheral surface of the tank, reaches through the funnel portion 13 to the intake drain hole 4 and is discharged outside from the intake drain hole. The output of the air device is controlled so as to be jetted under discharge pressure above water pressure of the portion where the jet of the air pipe is located. Thereby, a vertical convection occurs in the tank. The generating state of the vertical flow can be suitably controlled by the discharge pressure of the air device and can be set to the optimal state in dependency of the conditions of organisms to be cultivated. The exchange rate of water with the external can be adjusted by varying the size of the intake drain hole. For example, in the cultivation apparatus shown in Figs. 5 and 6, it can be adjusted by suitably changing an area of a doughnut portion defined by the intake drain hole having an inner diameter $r_2$ and the air pipe having an outer diameter $r_3$.

As the result, water within the tank is to be always circulated with sea water at a considerably deep position from the sea surface, and even the cultivation on the sea is not affected by the stain of the sea water surface, the generation of a red tide and the like. In the case of culture of plants, the plants are also vertically circulated by the vertical circulation of sea water. Therefore, an opportunity for receiving on the average the time for imparting light can be provided, the rate of oxygen present in sea water is enhanced by aeration, the cultivation with high density can be executed and the volume production can be made. In the case of the cultivation of algaes, according to this method, the cultivation making use of vegetative reproduction without using a fixed substrate can be carried out. This eliminates the need of steps for production of seedings and preservation of seedings and facilities therefor, and labor and equipment can be rapidly omitted as compared with the case of the conventional cultivation of algaes, enabling the rapid enhancement of cultivation efficiency.

In the case of the cultivation of animals such as fish, the own contamination of the interior of the tank is prevented by the increase of the amount of oxygen supplied resulting from aeration as described above and the discharge of excretion within the tank to outside due to the vertical circulation of sea water, and as the result, the raising with high density becomes enabled. Furthermore, the inner peripheral surface of the tank

6

is provided with the sheet, and sea water within the tank vertically circulates with the central portion of the tank being an up-flow to form a radial flow from the central portion of the tank toward the outer peripheral surface of the tank. The fish has a tendency, in its habit, to swim toward the central portion of the tank, and no wear of net to fish occurs as in the case of the conventional crawl cultivation or the like. Fleshy fish can be obtained with their suitable motion.

The present cultivation apparatus can be constructed merely by placing the sheet cover over the frames, thus reducing the construction cost. Moreover, at the time of natural disasters such as a typhoon, the apparatus can be easily moved, withdrawn and reconstructed. In addition, the growth rate can be promoted by adding nutritious salts of proper concentration into the tank. Furthermore, since the environment of the cultivation area can be controlled, an appropriate cultivation place can be enlarged more than that of prior art, rendering a large-scaled production possible.

The cultivation or culture of the following organisms was conducted by the above-described cultivation apparatus.

Algaes: Sewing thread, Meristotheca papulosa J. Agardh, Eucheuma muricatum Weber van Bosse, Enteromorpha clathrata Jagarda, Caulerpa Lentillifera, Sea lettuce, and Monostroma, nitidum Wittrock.

Shell fish: Boring clam, scaled clam, trochus shell, and green turban.

Fish: Rabbit fish

Seedings preserved: Nemacystus decipiens

Culture of feeds: Incubation of Artemia, and chlorella sp.

As the result, in any case, the cultivation or culture with high density was attained and the growth rate was high, as compared with the cultivation or culture according to the conventional methods.

The results of the examples of Caulerpa Lentillifera (sea grapes), Sewing thread, and Caulerpa Sewing thread were compared with the case of those in the conventional natural fishing ground. Tables 1 to 3 show such results. Table 1 shows the results of cultivation of Caulerpa Lentillifera. In Table 1, Class Nos. 1 and 2 show the case of the cultivation according to the present invention, and Class Nos. 3 to 6 show the results of cultivation according to the conventional method in the natural fishing ground. Table 3 shows the results of cultivation of Sewing thread according to the method of the present invention, and Table 3 likewise shows the results of cultivation of Caulerpa Lentillifera. The daily growth rate used in Tables is represented by the following formula:

Daily Growth Rate $= 100 \times \log (W_2/W_1) \times (1/N)$

$W_1$ : Weight at the start of cultivation
$W_2$ : Weight at the time of harvest
N : Number of days of cultivation

Table 1

| Class No. | Weight at Start | Harvest Kg | Test Start Date - Harvest date Year/Month/Date | Days Required | Manured | Daily Growth Rate % |
|---|---|---|---|---|---|---|
| 1 | 2.1 kg/t tank | 2.9 | 1990/5/30-6/25 | 7 | No | 2.00 |
| 2 | 5 kg/10t tank | 34.0 | 1991/9/1-10/10 | 40 | Yes | 2.08 |
| 3 | 200 g/m$^2$ | 2.5 | 1991/5/29-7/30 | 60 | No | 1.77 |
| 4 | 200 g/m$^2$ | 1.8 | 1991/5/29-7/30 | 60 | No | 1.59 |
| 5 | 200 g/m$^2$ | 2.0 | 1991/5/29-7/30 | 62 | No | 1.72 |
| 6 | 200 g/m$^2$ | 4.0 | 1991/5/29-8/16 | 77 | No | 1.69 |

Table 2

| Class No. | Weight at Start | Harvest Kg | Test Start Date - Harvest date Year/Month/Date | Days Required | Manured | Daily Growth Rate % |
|---|---|---|---|---|---|---|
| 1 | 5 kg/20t tank | 31 | 1991/11/19-12/2 | 14 | No | 5.65 |
| 2 | 5 kg/20t tank | 30 | " | " | No | 5.56 |

Table 3

| Class No. | Weight at Start | Harvest Kg | Test Start Date - Harvest date - Harvest date | Days Required | Manured | Daily Growth Rate % |
|---|---|---|---|---|---|---|
| 1 | 2 kg/20t tank | 8 | 1991/5/25-6/25 | 30 | No | 2.01 |
| 2 | 2 kg/20t tank | 10.5 | 1991/5/14-6/15 | 30 | No | 2.39 |

The daily growth rate of Sewing thread in the natural fishing grounds is normally about 1 %. Since the apparatus is installed in the fishing grounds for a long period of time, the wear phenomenon caused by waves occurs, and the harvest is unstable. However, according to the cultivation method of the present invention, the daily growth rate is remarkably high as shown in Tables 2 and 3, and since the cultivation is made within the tank, it is less affected by waves and the harvest is stable.

The cultivation apparatus according to the present invention is not limited to those shown in the above-described embodiments but various changes in design can be made. For example, with respect to the shape of the tank, the upper portion thereof is comprised of a cylindrical portion and a conical funnel portion in the above-described embodiments, it is to be noted that the shape is not limited to the cylindrical shape but it may comprise a polygonal cylindrical portion and a poly-pyramid funnel portion. Only the funnel portion will also suffice. In order to improve the circulation of sea water, a preferable shape of the tank is those mentioned above, but the bottom of the tank can be formed to be a plane instead of a funnel-shape. Furthermore, the tank may be formed from an integral structure of plates.

While in the above-described embodiment, the jet of the air pipe is directed at the intake drain hole of the tank so as to jet air from the bottom, it is to be noted that the air discharge hole 22 of the air pipe 21 may be extended through the net 23 provided at the intake drain hole and protruded into the tank, as shown in the embodiment shown in Figs. 5 and 6. Reference numeral 24 designates an air device provided on the land 25 or a ship or other fixed floating articles.

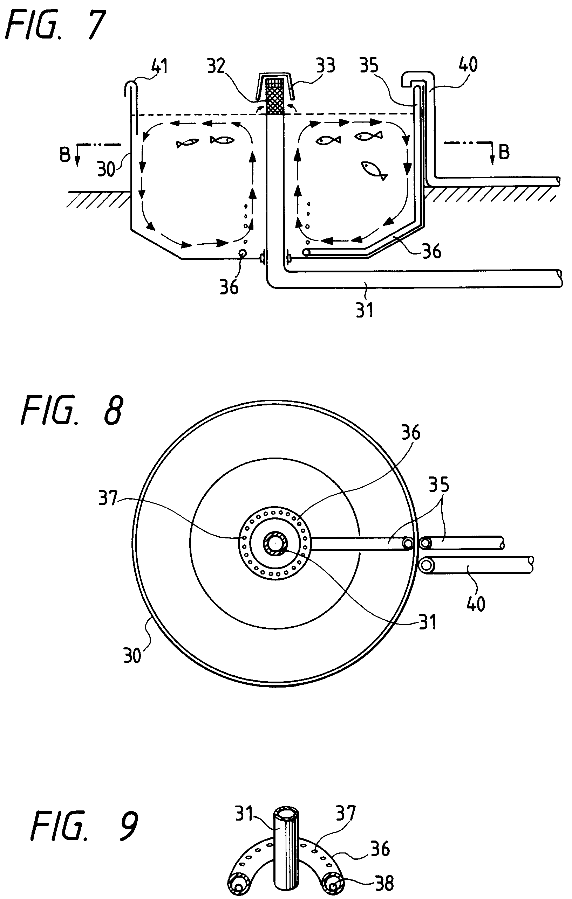

Figs. 7 to 9 show another embodiment of the present invention, showing an embodiment of the cultivation apparatus.

In the embodiment shown, a tank 30 is of a fixed construction formed of cement, metal or strenghtened plastic, or formed by attaching a water-proof sheet cover to the wooden frame, and the bottom of the tank is formed to be a pot bottom for easy vertical convection of water. Reference numeral 31 designates a drain pipe which extends through the central portion of the lower wall of the tank and to the central upper portion. At the upper portion of the drain pipe 31 is provided a net 32 to prevent fish, algaes and the like being cultivated within the tank from flowing out, and above the net is detachably provided a sunshade 33, which is formed of a black vinyl membrane or the like, to prevent the net and the drain pipe from direct exposure to sunlight. Reference numeral 35 designates an air pipe, the base end of which is connected to an air device installed externally, and to the bottom wall of the tank at the extreme end thereof is connected a ring-like aeration pipe 36 arranged so as to surround the drain pipe. The aeration pipe 36 is formed in its upper surface with air holes 37 in a suitably spaced relation to generate bubbles from the bottom wall of the tank so as to surround the drain pipe 31. Reference numeral 38 designates a weight which is inserted to prevent the aeration pipe 36 from floating.

Reference numeral 40 designates a water pipe for supplying water to the tank, the water pipe 40 being connected through a pump to a water source such as sea. In the present embodiment, a sunlight cutoff cover 41 formed from a black vinyl sheet or the like is detachably provided so as to cover the inner peripheral surface in the vicinity of the water surface portion of the tank. This prevents the light synthesizing action of organisms adhered thereto.

The apparatus according to the present embodiment is constructed as described above. Water within the tank installed on the land is such that an up-flow is generated in the center portion of the tank with the rising force of bubbles by the aeration from the bottom of the tank, a vertical convection with the peripheral wall of the tank being a down-flow occurs, and water always circulates from the upper portion to the lower portion. By suitably supplying water from the external, water reached the position of the net 32 of the drain pipe 31 overflows and flows-out outside from the drin pipe 31. Accordingly, water within the tank is exchanged with external water. At that time, water within the tank is always in the state of vertical convection, and thus the stained water never stays in the tank and is uniformly exchanged with fresh water. The operation and effect similar to those of the previous embodiments are brought forth by the vertical convection.

While the aforesaid tank has a circle in section, it is to be noted that the shape of the tank is not always limited to a circle but a square may be also employed. In this case, aeration pipes are so arranged that one pipe is arranged along each lower portion of a pair of side walls opposed to the tank to enable generation of the vertical convection.

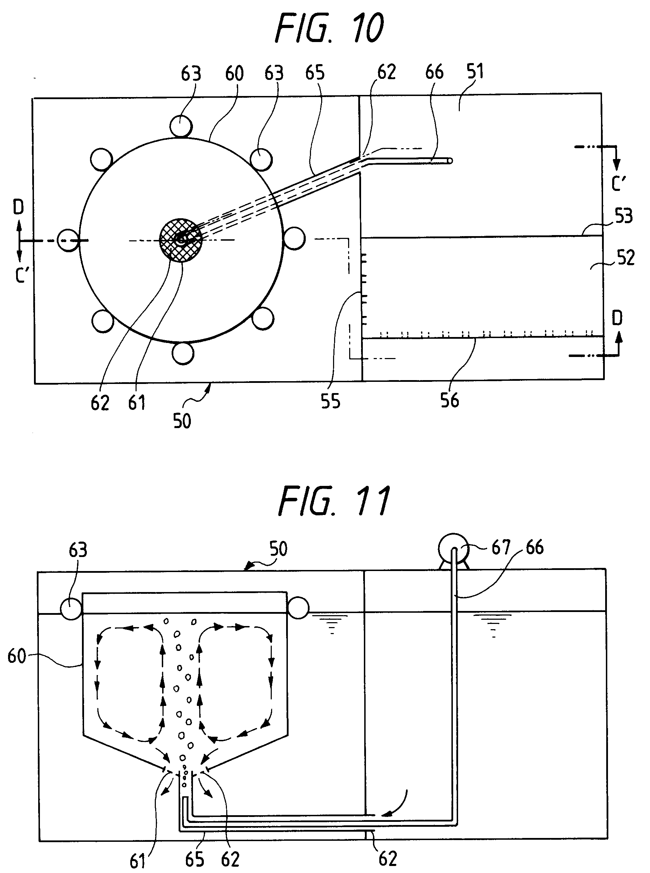

Figs. 10 to 13 show still another embodiment of the present invention relating to the cultivation apparatus installed on the land.

In the drawings, reference numeral 50 designates a water vessel or tank formed of concrete, strengthened plastic or the like, within which are provided a storage vessel 51 and a filtration vessel 52. A partitioning wall 53 between the storage vessel 51 and the filtration vessel 52 is formed to be lower than the peripheral wall of the water vessel so that water within the filtration vessel 52 overflows into the storage vessel. The filtration vessel 52 has a bottom wall 54 and side walls 55 and 56 facing to the inside of the water vessel formed with a number of inflow holes 57 through which water within the water vessel flows into the filtration vessel, the inflow holes 57 being formed from the bottom surface to a desired height position. Reference numeral 58 designates a fixed filter detachably provided so as to cover the entire horizontal inner surface of the filtration vessel above a position at which said inflow holes of the filtration vessel are formed.

Reference numeral designates a cultivation tank, shape of which has substantially the same as that of the embodiment shown in Fig. 5, and an opening is provided in the center portion of the lower portion thereof. In the present embodiment, however, the aforesaid opening comprises a drain hole 61 which merely serves to discharge water within the cultivation tank into the water vessel. Reference numeral 62 designates a net provided in the drain hole, and reference numeral 63 designates a float provided on the upper portion of the cultivation tank.

Reference numeral 65 designates a water pipe provided to be protruded vertically into the tank, the supply pipe 65 having its base end connected to an outflow hole 62 opened to the base of the storage vessel 51. Reference numeral 66 designates an air pipe provided interiorly of the water pipe 65, the air pipe 66 having its extreme end provided to be positioned somewhat lower than the extreme end of the water pipe and its base end connected to an air device 67 provided externally such as the upper portion of the storage vessel passing through the storage vessel.

The apparatus in the present embodiment is constructed as described above. Air is blown into the lower portion in the central portion of the cultivation tank through the air pipe by the air device for aeration whereby the vertical convection is generated within the tank similarly to the previously described embodiment, and with this, water within the storage vessel flows through the water pipe 65 into the cultivation tank. A part of the water which circulates within the cultivation tank to form a down-flow flows into the water vessel from the drain hole 61 at the bottom of the tank. At that time, the vertical convection position of water can be controlled by varying the height of the water pipe 65, and solids within the tank such as remaining baits can be precipitated and discharged into the water vessel by raising the protruding height of the water pipe. When water within the storage vessel flows into the tank, circulating flows occurs in the tank, the water vessel, the filtration vessel and the storage vessel. Water discharged from the drain hole of the tank into the water vessel flows through the inflow holes 57 formed in the bottom wall 52 and the side walls 55 and 56 of the filtration vessel into the lower portion of the filtration vessel 52, thence passes through the filter 58 and reaches the upper surface of the filtration vessel and is filtrated, and then overflows from the upper end edge of the partitioning wall 53, reaching the storage vessel 51.

Accordingly, clean water filtrated by the filter is always stored in the storage vessel 51, and clean water is to be supplied into the tank whereby water within the tank can be always maintained clean even the internal circulation, thus enhancing the cultivation efficiency. This apparatus can be applied to not only the preservation of living fish on the land but also the large-scaled cultivation.

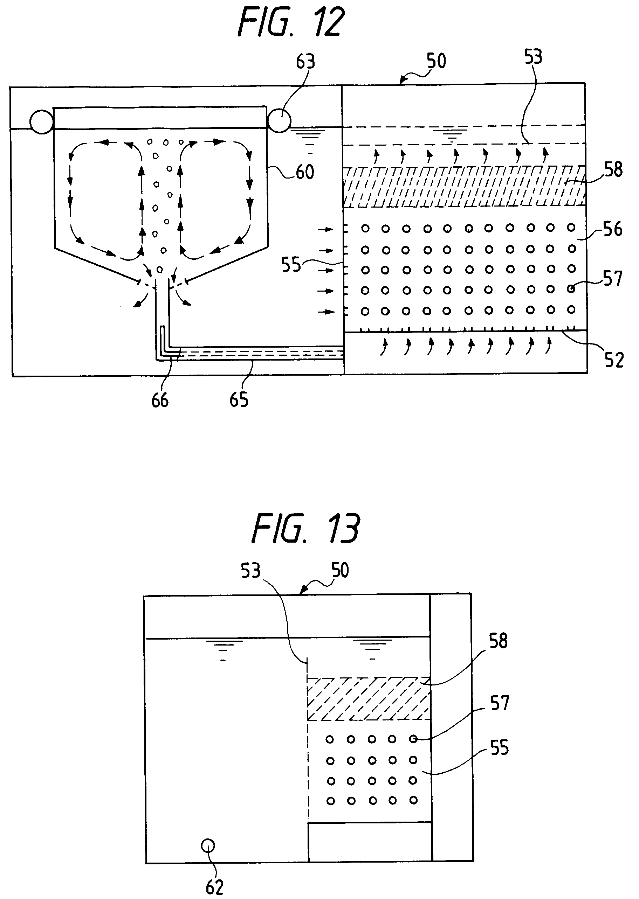

Fig. 12 shows still another embodiment of the present invention, showing an embodiment of the cultivation apparatus provided in the sea.

In the drawings, reference numeral 70 designates a spherical tank for cultivation, which is formed from a membrane obtained by coating a nitrile rubber, a chloroprene rubber or the like on both faces of a base cloth formed of fiber having a high strength and high elasticity, for example, such as polyvinyl fiber, and an intake drain hole 71 is formed at the lower end thereof. Since water pressure within the tank is the same as sea water pressure, pressure resistance is not much required but consideration should be taken into a tensile force generated from mutual action of a tide and therefore the spherical shape is desired. The intake drain hole 71 is provided with a net 72 similarly to the previously described embodiment. The spherical tank 70 is secured to a plurality of anchors 73 through wires 74 and maintained at a fixed depth. An air jet at the extreme end of an air pipe 75 connected to an air device 76 such as an air pump installed on the land or the ship or the floating article on the sea is arranged so as to jet air into the tank vertically from the intake drain hole 71. An exhaust valve not shown is provided at the upper portion of the tank. When the internal pressure of the tank is increased by aeration, the exhaust valve is automatically opened to escape air therein.

Reference numeral 80 designates an automatic bait feeder or an automatic fertilizer dropping device provided on the sea, which is connected to the upper portion of the tank through a bait feeding or fertilizer dropping pipe 81 so that the bait or fertilizer can be automatically supplied into the tank when necessary. In the case where the membrane of the tank is formed of a light impermeable material or the tank is installed at a deep position, a solar device is installed as well as the automatic bait feeder or the automatic fertilizer dropping device so that the sea is connected with the interior of the tank by an optical fiber 83 to introduce sunlight into the tank so as to make active the light synthesizing function and the reproducing function of organisms within the tank. Reference numeral 84 designates an illuminating device installed within the tank so as to diffuse sunlight supplied from the optical fiber into the tank.

Reference numeral 85 designates a harvesting pipe provided between a refrigerator 86 installed on the land or a harvesting ship 87 and the tank so that algaes and fishes and shellfishes cultivated in the tank can be directly harvested on the land or on the ship.

As described above, according to the present apparatus, the vertical convection is generated in the tank defined in the sea such as the deep sea to automatically circulate sea water, and at the same time, fresh sea water is introduced from the sea bottom while the stained sea water is discharged. Therefore, the interior of the tank is always maintained in a clean state and the flow is generated as described above. Thus, the cultivation with high density and high efficiency involving high growth rate of organisms can be provided. Since the apparatus can be installed at a suitable depth in the sea, the cultivation under the water pressure suitable for the reproducing environment of organisms to be cultivated, which has been impossible in the conventional cultivation method, can be provided. Further, the interior of the tank can be illuminated by sunlight from the solar device even in the deep sea to promote the light synthesizing action of organisms and materially enhance the growth rate. Moreover, since operation is carried out in the sea, there is less affected by the typhoon or the like. The cultivation can be accomplished in a stable manner.

INDUSTRIAL APPLICABILITY

This invention can be utilized for the cultivation of algaes and fishes and shellfishes on the water surface and underwater of sea, lake and the like and on the land, preservation of seedings of organisms such as algaes, and cuture of feeds. The environment of raising the organisms can be improved and the cultivation with high density and effect and high quality can be provided. Further, this invention can be also utilized for the cultivation in a small scale such as indoor, inship and the like, and also in a large scale such as on the land, in the sea, and the like. In addition, the cultivation in deep sea can be also carried out. The invention provides the fisheries with wide range, high efficiency and high quality as compared with the conventional cultivation methods. The apparatus of the invention has an extremely high utility.

**Claims**

1. A method for the cultivation of marine organisms, the method comprising: upwardly feeding air into water within a tank from the neighbourhood of the bottom of the tank in which marine organisms are cultivated to thereby generate a vertical convection with respect to water within said tank, and cultivating the marine organisms therein.

2. A method for the cultivation of marine organisms according to Claim 1, wherein said tank has its upper end located above a water level with its bottom at the lower end located in water, an intake drain hole is opened in the central portion of the lower bottom, air adapted to generate a vertical convection within the tank is fed into the tank from the central portion of the intake drain hole to generate the vertical convection of water within the tank whereby water is introduced into the tank from the intake drain hole and the water within the tank is allowed to flow outside the tank, and the marine organisms are cultivated while exchanging the water within the tank with the water outside the tank.

3. A method for the cultivation of marine organisms according to Claim 1, wherein said tank is installed on the land, water is supplied into the tank from an external source and water within the tank is discharged outside due to overflow.

4. A method for the cultivation of marine organisms according to Claim 1, wherein said tank is installed within a water vessel installed on the land, a drain hole is provided at the bottom thereof, a water supply pipe connected to a storage tank installed within the water vessel is provided in the central portion of the drain hole, an air pipe is provided extending through the water supply pipe, air adapted to generate a vertical convection is fed from the air pipe to generate the vertical convection in water within the tank whereby purified water filtrated within the storage tank is introduced through the water supply pipe into the tank and the water within the tank is discharged into the water vessel, and the water discharged into the water vessel is filtrated and again returned to the storage tank for circulation.

5. A method for the cultivation of marine organisms according to Claim 1, wherein said tank is installed in water, an intake drain hole is opened in the central portion of the lower end bottom thereof, air adapted to generate a vertical convection in the tank is supplied from the central portion of the intake drain hole to generate the vertical convection of water within the tank whereby water is introduced into the tank from the intake drain hole and the water within the tank is allowed to flow outside the tank.

6. An apparatus for the cultivation of marine organisms comprising a tank (1, 20, 30, 60, 70) for cultivating marine organisms, and an air pipe (7, 21, 35, 66, 75) having an air jet adapted to upwardly jet air into water within the tank in the vicinity of the tank and having a base end connected to the air device.

7. An apparatus for the cultivation of marine organisms according to Claim 6, wherein said tank (1, 20) has its upper end located above a water level with its lower end bottom located in water, an intake drain hole (4) is opened in the central portion of the lower end bottom, and said air pipe (7, 21) is arranged so as to feed air into the tank from the central portion of the intake drain hole.

8. An apparatus for the cultivation of marine organisms according to Claim 6 or 7, wherein said tank (1, 20, 60, 70) is designed so that a water impermeable sheet cover is detachably placed over a frame.

9. An apparatus for the cultivation of marine organisms according to Claim 6, wherein said tank (30) is installed on the land, a water pipe (40) through which water is supplied into the tank from the outside is connected, and a drain pipe through which water within the tank is discharged outside from the top is connected.

10. An apparatus for the cultivation of marine organisms comprising a water vessel (50), a tank (60) for cultivating marine organisms installed within said water vessel and having an upper end located above a water level, a lower end bottom located in water and a drain hole (61) opened in the central portion of the lower end bottom, a filtration vessel (52) installed within said water vessel so that water within said water vessel can flow therein and interiorly provided with a filter (58) for filtrating water flown into said water vessel, a storage vessel (51) into which water filtrated in said filtration vessel (52) flows, a water pipe (65) connected to said storage vessel (51) to supply water within the storage vessel into the tank through the central portion of the drain hole (61) of said tank (60), and an air pipe (66) for feeding air from an air device (67) to the central portion at the lower portion of said tank passing through said water pipe.

11. An apparatus for the cultivation of marine organisms comprising a tank (70) for cultivating marine organisms installed in water having an intake drain hole (71) opened in the central portion at the lower end bottom, an exhaust valve and a bait feeding or fertilizer dropping hole provided at the upper portion and a harvesting hole provided in a suitable peripheral wall portion, an air pipe (75) for feeding air through said intake drain hole (71) to the central portion at the lower portion of said tank (70), a bait feeding or fertilizer dropping pipe (81) connected to said bait feeding or fertilizer dropping hole so as to be able to supply a bait or a fertilizer into said tank, and a harvesting pipe (85) having one end connected to said harvesting hole and the other end connected to a pump.

12. An apparatus for the cultivation of marine organisms according to Claim 11, wherein sunlight is introduced into said tank by an optical fiber (83) to illuminate said tank.

# FIG. 1

# FIG. 2

## FIG. 3

## FIG. 4

## FIG. 5

## FIG. 6

*FIG. 7*

*FIG. 8*

*FIG. 9*

# FIG. 10

# FIG. 11

*FIG. 12*

*FIG. 13*

FIG. 14

EP 0 574 589 A1

# INTERNATIONAL SEARCH REPORT

International application No.

PCT/JP92/01728

### A. CLASSIFICATION OF SUBJECT MATTER

Int. Cl$^5$  A01K63/04

According to International Patent Classification (IPC) or to both national classification and IPC

### B. FIELDS SEARCHED

Minimum documentation searched (classification system followed by classification symbols)

Int. Cl$^5$  A01K61/00-63/06

Documentation searched other than minimum documentation to the extent that such documents are included in the fields searched

| | |
|---|---|
| Jitsuyo Shinan Koho | 1962 – 1992 |
| Kokai Jitsuyo Shinan Koho | 1973 – 1992 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP, U, 61-136868 (Kasuya Seimo K.K.), August 26, 1986 (26. 08. 86), (Family: none) | 1-12 |
| Y | JP, U, 52-165098 (Takeshi Hayashi), December 14, 1977 (14. 12. 77), (Family: none) | 1-12 |
| Y | JP, U, 48-36095 (K.K. Mitsumata Zosenjo), April 28, 1973 (28. 04. 73), (Family: none) | 1-12 |
| Y | JP, U, 56-26566 (Tokyo Kyuei K.K.), March 11, 1981 (11. 03. 81), (Family: none) | 1-12 |
| Y | JP, A, 52-150298 (Takeshi Hayashi), December 13, 1977 (13. 12. 77), (Family: none) | 11 |
| Y | JP, A, 53-117597 (Hatsuro Fujii), | 11 |

[X] Further documents are listed in the continuation of Box C.   [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| March 15, 1993 (15. 03. 93) | March 23, 1993 (23. 03. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)

C (Continuation).   DOCUMENTS CONSIDERED TO BE RELEVANT

| Category* | Citation of document, with indication, where appropriate, of the relevant passages | Relevant to claim No. |
|---|---|---|
| | October 14, 1978 (14. 10. 78),<br>(Family: none) | |
| Y | JP, A, 60-248122 (Tokyu Musashi Kogyo K.K.),<br>December 7, 1985 (07. 12. 85),<br>(Family: none) | 11 |
| Y | JP, U, 55-172232 (Mitsubishi Electric Corp.),<br>December 10, 1980 (10. 12. 80),<br>(Family: none) | 11 |
| Y | JP, U, 49-105697 (Komori Shokai K.K.),<br>September 10, 1974 (10. 09. 74),<br>(Family: none) | 12 |
| Y | JP, U, 61-83866 (NEC Home Electronics<br>Co., Ltd.),<br>June 3, 1986 (03. 06. 86),<br>(Family: none) | 12 |